(19) **Europäisches Patentamt European Patent Office Office européen des brevets**

(11) **EP 2 008 878 B1**

(12) **EUROPEAN PATENT SPECIFICATION**

(45) Date of publication and mention
of the grant of the patent:
**31.10.2012   Bulletin 2012/44**

(51) Int Cl.:
***B60R 21/2165*** (2011.01)

(21) Application number: **07111159.5**

(22) Date of filing: **27.06.2007**

(54) **Panel for an airbag restraint system**

Platte für ein Airbag-Rückhaltesystem

Panneau pour un système de retenue à airbag

(84) Designated Contracting States:
**DE GB SE**

(43) Date of publication of application:
**31.12.2008   Bulletin 2009/01**

(73) Proprietor: **Volvo Car Corporation
405 31 Göteborg (SE)**

(72) Inventors:
• **Jonsson, Tony
1632 Riaz (CH)**
• **Saslecov, Venti
41658 Göteborg (SE)**
• **Johansson, Gustaf
41665 Göteborg (SE)**

(74) Representative: **Valea AB
Lindholmspiren 5
417 56 Göteborg (SE)**

(56) References cited:
**EP-A- 1 193 140          WO-A-99/01317
WO-A-2004/058444     DE-A1- 10 135 614
US-A- 6 065 771          US-A1- 2001 037 998
US-A1- 2003 222 063**

## Description

### TECHNICAL FIELD

The present invention concerns a panel for covering a recess that accommodates an airbag, an airbag restraint system and a method for manufacturing a panel for covering a recess that accommodates an airbag.

### BACKGROUND OF THE INVENTION

Airbag restraint systems, also known as a Supplementary/Secondary Restraint Systems, Air Cushion Restraint Systems or Supplemental Inflatable Restraints are most commonly used for cushioning an occupant of a vehicle in a crash situation by reducing the risk of an occupant's head and upper body striking some part of the vehicle's interior and by distributing crash forces more evenly across the occupant's body.

An airbag restraint system usually comprises an access door that is arranged behind an outer foil. In some cases the underside of the outer foil is provided with weakened seams so that it will be torn apart at the weakened seams. German patent application no. DE 101 35 614 discloses such an outer foil that consists of a support part, a soft foam sheet bonded thereto and a decorative layer bonded to the foam sheet. The outer foil is provided with at least one predetermined break line. Impact and compression forces produced upon activation of the airbag cause the outer foil to start to rip open along the predetermined break line.

As an airbag is inflated the outer foil may however be stressed and deformed in quite a large area around its predetermined break line(s). Energy is therefore utilized to deform the outer foil, which impedes the deployment of the airbag and which is disadvantageous since airbags must inflate rapidly if they are to help reduce the risk of a vehicle occupant hitting the vehicle's interior in a crash situation. If an airbag system is designed to inflate more rapidly to compensate for the energy expended in deforming the outer foil, the airbag can injure a vehicle occupant if he/she is sitting too close to a panel or a section of the interior trim covering an airbag recess when the airbag is deployed. Injuries such as abrasion of the skin, hearing damage (from the sound during deployment), head injuries, eye damage for spectacle wearers and breaking of the nose, fingers, hands or arms can occur if an airbag is deployed too aggressively.

Since the outer foil for an airbag recess is usually quite thin, i.e. a few millimetres thick, it may be difficult, and consequently time consuming and expensive, to form break lines in the outer foil. Furthermore, the break lines of an outer foil may be visible or palpable from the inside of the passenger compartment of a vehicle, and may thereby detract from the aesthetic appearance of the vehicle.

US 6 065 771 concerns an instrument panel that reconciles the cleaving performance and the quality of appearance of an Instrument panel for an bag. The instrument panel has a skin member of a single layer structure, a cleaving section formed by a groove provided on the back of the skin member is composed of a longitudinal cleaving section which is substantially linear and a pair of "V" shaped lateral cleaving sections which are ramified respectively from both ends of the longitudinal cleaving section and which open forward and extend obliquely with respect to the direction of extension of the longitudinal cleaving section.

EP 1 193 140 discloses an air bag cover having a surface sheet including a TPE layer (decorative layer) on the surface side. A surface sheet with the breaking elongation adjusted by providing a filler in the TPE material. Thereby, the breaking rapidity at a tear line groove formation portion is improved.

WO 2004/058444 relates to a method for creating a pre-weakened zone in a textile surface structure, in particular a fabric. Part of the textile material is removed by laser treatment in order to create a predetermined breaking point, for example to allow the exit of an airbag. To achieve this, a line of interspaced perforations is made in the thread of the textile surface structure. The distance between the perforations along the pre-weakened zone preferably deviates from the respective distance between the threads.

DE 101 35 614 discloses an airbag that is hidden behind the cover of a car door in order to enter the passenger cabin in case of a lateral impact. The cover is assembled of a rigid inner layer, a central layer of foam rubber, and a decorative outer layer matching the interior of the vehicle. At least one pre-determined breaking line is positioned across the rear of the cover, invisible for the passenger, but affecting all layers and preventing large cover areas from entering the passenger cabin after an activation of the airbag unit.

WO 99/01317 concerns an airbag cover that comprises a laminate formed from a thermoplastic substrate base layer, a foamed thermoplastic intermediate layer and a thermoplastic decorative foil layer, wherein a panel for permitting release of an airbag is outlined in the cover by laser cuts extending into the laminate from said base layer, said laser cuts having a substantially uniform depth into the laminate.

US 2003/222063 describes a process for forming an instrument panel or other motor vehicle interior trim component having a laser scored invisible deployment restraint system opening. Processing of such components having foam material layers often produces compression forces in the foam. Heat ageing of the foam causes the compression set to be relieved, which causes the deployment seam line to become visible. In this process the part is heated prior to laser scoring to relieve compression forces within the foam layer prior to laser scoring.

US 2001/037998 concerns a method and apparatus for forming lines of weakness in an automotive trim piece so as to enable formation of an airbag deployment opening in the trim piece. A cutting beam, such as a laser is directed at the trim piece surface to be scored and a sensor emits a sensing beam, and a beam combining device receives both the sensor beam and the laser beam and causes downstream beam segments to be collinear with each other as they impinge the trim piece surface. The scoring is thereby able to be carried out in a single pass, and is precise, repeatable and independent of cutting depth, angle of cutting, scoring patterns, material inconsistency, material color, and surface grain variability.

SUMMARY OF THE INVENTION

An object of the present invention is to provide an improved panel for covering a recess that accommodates an airbag.

This object is achieved by a panel having the features of claim 1 namely a panel that comprises an outer foil having at least two foil layers, whereby the outer foil comprises an outermost foil layer. The panel comprises a rupture layer having a greater stiffness, k, than the outermost foil layer of the outer foil. It should be noted said "panel" is a panel or a section constituting the interior trim of a vehicle, whereby the part of the panel that actually covers the recess that accommodates an airbag is indistinguishable from the rest of the panel when viewed from the space into which the airbag will be deployed. The expression "outermost foil layer" is intended to mean the foil layer that is furthest from the airbag/airbag recess and closest to the space in which the airbag is to be deployed, such as the passenger compartment of a vehicle.

The rupture layer is attached to one surface of a foil layer, whereby said rupture layer is provided with at least one break line, i.e. a continuous or perforated or intermittent line, cut or slit that is confined to said rupture layer. The at least one break line in the rupture layer may be a thin slit that becomes invisible from the space into which an airbag will be deployed when one or more outer foil layers is/are sprayed over the rupture layer or it may be a channel having a constant or varying width of up to 20 mm. The at least one break line may be produced by reducing the thickness of said rupture layer or weakening, scoring or cutting the rupture layer using a laser or a sharp instrument such as a knife. The rupture layer is arranged to rupture, i.e. break, burst, crack, fracture, tear, separate, divide, sever or split, along said at least one break line on inflation of an airbag, causing the rupture to extend through the outermost foil in the direction in which the airbag is deployed, thereby forming an opening through the panel for the deployment of the inflated airbag. The outer foil comprises a sprayed foil layer arranged on each side of the rupture layer.

The deformation of such a panel on deployment of an airbag will be reduced or eliminated because impact and compression forces produced upon activation of the airbag will be concentrated in those parts of the panel located along the break line in the stiff, substantially non-expandable rupture layer. Since the rupture layer is attached to the outer foil, both the rupture layer and the outer foil will rupture along the at least one break line. It is therefore possible to control where the outer foil will rupture, and consequently to control the deployment of an airbag without having to provide the outer foil itself with any break lines. Furthermore, since the thickness of the panel is increased in the area of the airbag recess by the addition of the rupture layer to an outer foil, the part of the panel that covers the recess will not be visible or palpable from the space into which an airbag is to be deployed, thereby improving the aesthetic appearance of the vehicle in which it is included and increasing the vehicle manufacturer's design options.

The stiffness, k of a body that deflects a distance δ under an applied force P is given by

$$ k = \frac{P}{\delta} $$

and is typically measured in newtons per metre. Stiffness is a property of a solid body and is dependent on the material constituting the body and the shape of the solid body. If for example, the rupture layer and the outermost foil layer are in the form of sheets of uniform thickness, the rupture layer may be made of the same material as the outermost foil layer but have a greater thickness than the outermost foil layer and thereby have a greater stiffness than the outermost foil layer.

Alternatively, the rupture layer may be made of a different material than the outermost foil layer, or may comprise the same material as the outermost foil layer and a reinforcing filler, such as fibreglass, in which cases the rupture layer may have the same thickness as the outermost foil layer or thinner.

Furthermore, the materials of the rupture later and the outermost foil layer may be chosen so that the outermost foil layer ruptures when the width of said at least one break line, in the form of a slot for example, has been extended by a predetermined amount, such as when it has been extended to twice its original width for example.

The outer foil is manufactured using a sprayed skin technique, whereby the outer foil is manufactured by spraying plastic, onto both sides of the rupture layer comprising at least one break line.

The outer foil comprises a plurality of foil layers and the rupture layer is incorporated between two foil layers. The outer foil may for example comprise a substrate layer, a layer of foam and a layer of decorative or patterned material, such as plastic, natural or synthetic leather or fabric whereby the rupture layer comprising said at least one break line is placed between any two of the foil layers.

The panel may have a thickness up to 10 mm, preferably in the range of 1-3 mm.

The outer foil may comprise a plastic, a thermoplastic such as polyvinyl chloride (PVC), thermoplastic olefin (TPO), or a thermosetting plastic such as EPDM rubber. TPO is a trade name that refers to polymer/filler blends usually consisting of some fraction of polypropylene, polyethylene block copolymer polypropylene or rubber.

The rupture layer may comprise a material having membrane stiffness equal to or greater than 50 N/m. Utilizing a rupture layer having a high membrane stiffness ensures that the rupture layer will not be stressed or deformed in a direction along its planar surface.

The rupture layer may comprise fibre glass, carbon fibre, Kevlar, a synthetic resin such as epoxy resin, or metal. The rupture layer may for example comprise plastic reinforced with one or more of these materials.

According to a further embodiment of the invention the method comprises the step of applying a mask defining said at least one break line onto an outer foil and spraying at least one additional layer onto the outer foil to provide said rupture layer. A first outer foil is sprayed to produce a foil having a desired foil thickness and surface grain. In order to manufacture a panel of this type, a mask defining said at least one break line is placed on the rear surface of the outer foil, prior to the application of at least one additional sprayed layer. The mask may be left in place in the finished panel or may be removed therefrom. The thickness of the mask should be equal to, or greater than the thickness of the at least one additional sprayed layer. The at least one additional sprayed layer may also be applied by rotary casting. The sprayed layers may comprise the same, or different types of polyurethane (PU). An aliphatic PU may be used for both the outer foil and the additional sprayed layer(s), or the first outer foil may comprise an aliphatic PU and the additional sprayed layer(s) may comprise an aromatic PU, for example.

According to an embodiment of the invention the rupture layer is in the form of a net.

The rupture layer may have a thickness up to 3 mm, preferably up to 1 mm.

According to another embodiment of the invention the at least one break line defines a hinged or non-hinged lid, i.e. it outlines the periphery of a lid, having an area, A, and the rupture layer has an area, B, that is greater than the area of the lid, A. This will ensure that deformation of the panel outside the area of the lid will be eliminated or restricted to a minimum. The area, B, of the rupture layer may be up to 30% greater than the area, A, of the lid. Alternatively, the area, B, of said rupture layer is equal to the area, A, of the lid whereby an edge of the rupture layer constitutes a break line.

The present invention also concerns an airbag restraint system comprising an airbag and a panel according to any of the embodiments of the invention for a recess that accommodates an airbag. The rupture layer that comprises at least one break line is placed between the airbag and the outermost foil layer of the outer foil, i.e. the foil layer furthest from the airbag/airbag recess and closest to the space into which the airbag is to be deployed. The rupture layer ruptures at the at least one break line on inflation of the airbag and forms an opening through the panel for deployment of the inflated airbag into said space. The airbag restraint system according to the invention is particularly, but not exclusively intended for use with an airbag, inflatable tubular structure or inflatable curtain that is specifically designed to reduce the risk of injury to an occupant inside a vehicle in a crash situation, such as a head-on or side-on collision and may be mounted anywhere inside a vehicle such as in an instrument panel or a door of the vehicle. The airbag restraint system may also be used on the outside of a vehicle, for example to protect a pedestrian from injury in a crash situation.

The present invention also concerns a method for manufacturing a panel for covering a recess that accommodates an airbag, whereby the panel comprises an outer foil comprising at least one foil layer wherein one foil layer is an outermost foil layer. The method comprises the step of providing the outer foil with a rupture layer that comprises at least one break line that is confined to said rupture layer, whereby the rupture layer has a greater stiffness than the outermost foil layer of the outer foil.

According to an embodiment of the invention the method comprises the step of manufacturing the outer foil and attaching said rupture layer to one surface of the manufactured outer foil, whereby said rupture layer is provided with at least one break line before it is attached to one surface of the manufactured outer foil. The at least one break line may be produced by reducing the thickness of said rupture layer or weakening, scoring or cutting the rupture layer using a laser or a sharp instrument such as a knife. The method may comprise the step of attaching the rupture layer to one surface of the outer foil by means of adhesive bonding. The outer foil may have a thickness up to 10 mm, preferably in the range of 1-3 mm.

According to another embodiment of the invention the method comprises the step of incorporating said rupture layer into the outer foil during the manufacture of the outer foil, whereby said rupture layer is provided with at least one break line before it is incorporated into the outer foil. The method comprises the step of manufacturing the outer foil using a sprayed skin technique, whereby foil layers are sprayed onto both surfaces of the rupture layer comprising at least one break line. The at least one break line may for example be produced by scoring the layer that is to be the rupture layer using a laser or a sharp instrument such as a knife. One or more foil layers is/are then sprayed on top of the rupture layer whereby the at least one break line becomes invisible from the space into which an airbag is to be deployed.

The outer foil may comprise a plastic, a thermoplastic such as polyvinyl chloride (PVC), thermoplastic olefin (TPO), or a thermosetting plastic such as EPDM rubber.

The rupture layer may comprise a material having membrane stiffness equal to or greater than 50 N/m.

The rupture layer may comprise fibre glass, carbon fibre, Kevlar, a synthetic resin or metal.

According to another embodiment of the invention the rupture layer is in the form of a net.

The rupture layer may have a thickness up to 3 mm, preferably up to 1 mm.

According to a further embodiment of the invention the at least one break line defines a lid having an area, A, and that the rupture layer has an area, B, that is greater than the area of the lid, A. The rupture layer is arranged to extend a predetermined distance beyond the area defined by the lid to ensure that it does not become loose or delaminated along the edges. The area, B, of the rupture layer may be up to 30% greater than the area, A, of the lid.

The present invention also concerns a vehicle that comprises a panel according to any of the embodiments of the invention or an airbag restraint system according to the invention.

BRIEF DESCRIPTION OF THE DRAWINGS

The present invention will hereinafter be further explained by means of non-limiting examples with reference to the appended figures where;

Figure 1     schematically shows a vehicle according to an embodiment of the invention,

Figure 2     schematically shows a panel for a recess that accommodates an airbag according to an embodiment of the invention before the deployment of an airbag,

Figure 3     schematically shows the panel illustrated in figure 2 during the deployment of an airbag,

Figure 4     schematically shows a panel for covering a recess that accommodates an airbag according to another embodiment of the invention, and

Figure 5     shows the location of a panel under the outer foil of an instrument panel of a vehicle viewed from above.

It should be noted that the drawings have not been drawn to scale and that the dimensions of certain features have been exaggerated for the sake of clarity.

DETAILED DESCRIPTION OF EMBODIMENTS

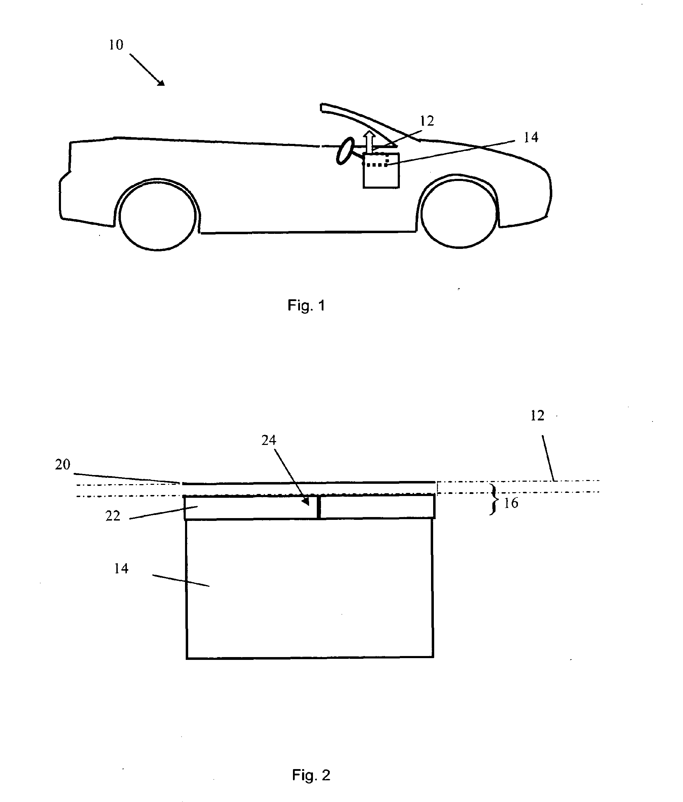

Figure 1 shows a vehicle 10 comprising an instrument panel 12 that covers a recess 14 that accommodates an airbag that is arranged to be deployed in the direction indicated by the block arrow in figure 1. The recess 14 is not visible from the inside of the passenger compartment 18 of the vehicle 10. Alternatively, the recess 14 could be covered by part of the interior trim of the vehicle, by a door panel for example or it could be located in the bonnet of a vehicle whereby the airbag is arranged to be deployed on the outside of the vehicle to protect a pedestrian from injury in a crash situation for example.

Figure 2 shows a panel 16 for covering an airbag recess 14. The panel 14 comprises an outer foil having only one foil layer 20, whereby that foil layer 20 constitutes the outermost foil layer of the outer foil. The foil layer 20 comprises a TPO for example. The panel 16 also comprises a rupture layer 22, comprising a TPO reinforced with carbon particles, whiskers or fibres for example, and having a greater stiffness than the foil layer 20. The outer foil constitutes part of the instrument panel 12 that extends from one A-pillar to the other in the illustrated embodiment. The dash-dotted line in figure 2 represents the continuation of the outer foil 20 although only the part of the outer foil 20 that conceals the recess 14 is indicated in figure 2 for the sake of clarity. The outermost surface of the outer foil 20 preferably has a colour and/or pattern that matches the interior trim of the passenger compartment 18 of the vehicle 18.

The rupture layer 22 is provided with one break line 24 before it is attached to the innermost surface of the foil layer 20 by continuous or non-continuous joining such as by adhesive bonding for example. The break line 24 may extend all the way through the rupture layer 22 as shown in figure 2 or it may extend through only part of the thickness of the rupture layer 22. The break line 24 is however, in all embodiments of the invention, confined to the rupture layer 22 and does not extend through a plurality of layers constituting the panel 16. The total thickness of the panel 16 in the illustrated embodiment is in the range of 2-3 mm, whereby the thickness of the rupture layer 22 is approximately 1 mm.

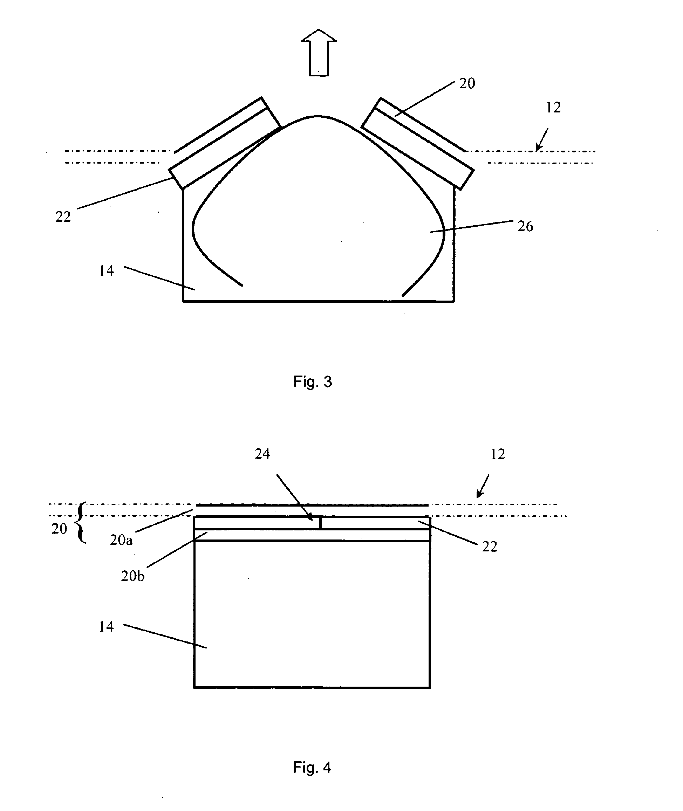

Figure 3 shows the panel 16 illustrated in figure 2 during the deployment of an airbag 26. The inflation of the airbag 26 causes the airbag to impact against the panel 16 and subject it to a force acting in the direction of the arrow shown in figures 1 and 3. The rupture layer 22 and the foil layer 20 of the outer foil 20 rupture along the break line 24 under the action of said force, thus providing a clean cut through the panel 16 on inflation of the airbag 26. The break line 24 has the form of an "H", whereby the line interconnecting to the parallel lines of the H-shaped break line 24 extends along the centre of the recess 14. On inflation of the airbag 26, two lids, whose edges are defined by the H-shaped break line 24 open in the direction of the deployment of the airbag. An opening for deployment of the inflated airbag 26 is thereby formed in a controlled and predictable manner along at least part of the length/width of the recess 14.

Figure 4 shows a panel 16 according to another embodiment of the invention. The panel comprises an outer foil 20 comprising two foil layers 20a and 20b and a rupture layer 22 having a greater stiffness than the outermost foil layer 20a and comprising a break line 24 confined to said rupture layer 22. The rupture layer 22 is incorporated into the outer foil 20 during the manufacture of the outer foil 20. The outer foil 20 ruptures at the break line 24 on inflation of an airbag 26 to form an opening through the panel 16 through which the inflated airbag may be deployed. Such a panel is manufactured using a sprayed skin technique whereby the rupture layer 22 is incorporated between two foil layers 20a and 20b.

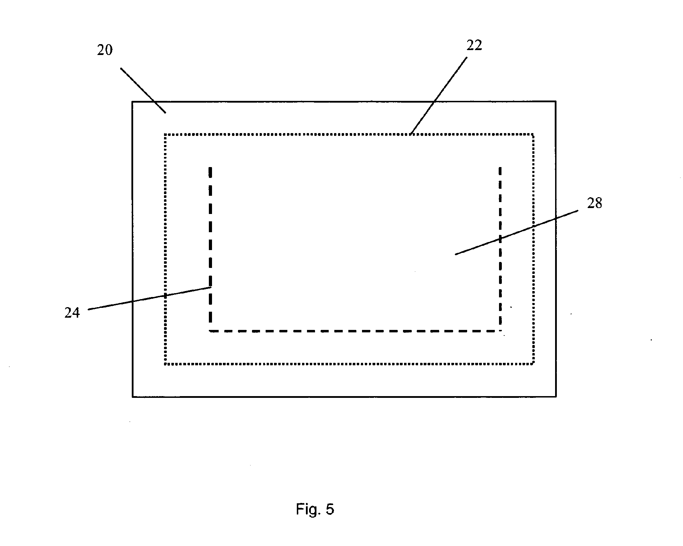

Figure 5 shows the location of a break line 24 under the outer foil 20 of a panel, such as an instrument panel of a vehicle, viewed from above. The panel comprises a rupture layer 22 comprising a break line 24 defining a hinged lid 28, having an area, A, and the rupture layer 22 has an area, B, that is approximately 20% greater than the area of the lid 28, A. The lid 28 may be of any shape, such as rectangular, square or circular. It should be noted that the part of the panel that covers the recess accommodating an airbag will not be visible from the inside of a passenger compartment 18 and that an occupant inside a passenger compartment 18 will only see the outermost surface of the outermost foil 20 of the panel. An airbag restraint system may further be provided with means to prevent such a lid 28 from being propelled towards an occupant of the passenger compartment of the vehicle. Alternatively the rupture layer 22 may be attached only locally in the region around the break line 24 shown in figure 5, in which case it should be noted that the edge of the rupture layer 22 may be considered to constitute a break line. For example the rupture layer may be of a rectangular shape having a rectangular cut out at its centre, whereby at least one break line is arranged in between the outer rectangular periphery of the rupture layer and the periphery of the rectangular cut out at the centre of the rupture layer.

Further modifications of the invention within the scope of the claims will be apparent to a skilled person.

**Claims**

1. Panel for covering a recess (14) that accommodates an airbag (26), which panel comprises an outer foil (20) having at least two foil layers (20a, 20b) whereby the outer foil (20) comprises an outermost foil layer (20a), whereby the panel comprises a rupture layer (22) having a greater stiffness than the outermost foil layer (20a) of the outer foil (20) whereby said rupture layer (22) is attached to one surface of the said outer foil (20); the rupture layer (22) is provided with at least one break line (24) that is confined to said rupture layer (22) and is arranged to rupture along said at least one break line (24) on inflation of an airbag (26) and form an opening through the panel (16) for deployment of the inflated airbag (26), **characterized in that** said two foil layers of said outer foil (20) comprises a sprayed foil layer (20a, 20b) which sprayed foil layers are arranged on each side of said rupture layer (22).

2. Panel (16) according to claim 1, **characterized in that** said rupture layer (22) is arranged to rupture when the width of said at least one break line (24) has been extended by a predetermined amount.

3. Panel (16) according to any of the preceding claims, **characterized in that** the outer foil (20) comprises a plastic, a thermoplastic such as polyvinyl chloride (PVC), thermoplastic olefin (TPO), or a thermosetting plastic such as EPDM rubber.

4. Panel (16) according to any of the preceding claims, **characterized in that** said rupture layer (22) comprises a material having membrane stiffness equal to or greater than 50 N/m.

5. Panel (16) according to any of the preceding claims, **characterized in that** said rupture layer (22) comprises fibre glass, carbon fibre, Kevlar, a synthetic resin or metal.

6. Panel (16) according to any of the preceding claims, **characterized in that** said rupture layer (22) is in the form of a net.

7. Panel (16) according to any of the preceding claims, **characterized in that** the panel has a thickness up to 15 mm, preferably in the range of 1-3 mm.

8. Panel (16) according to any of the preceding claims, **characterized in that** said rupture layer has a thickness up to 3 mm, preferably up to 1 mm.

9. Panel (16) according to any of the preceding claims, **characterized in that** said at least one break line (24) defines a lid (28) having an area, A, and that said rupture layer (22) has an area, B, that is greater than the area, A, of the lid (28).

10. Panel (16) according to claim 9, **characterized in that** the area, B, of said rupture layer (22) is up to 30% greater than the area, A, of the lid (28).

11. Airbag restraint system comprising an airbag (26) and a panel (16) according to any of claims 1-10 for a recess (14) that accommodates an airbag (26), **characterized in that** said rupture layer (22) that comprises at least one break line (24) is placed between the airbag (26) and the outermost foil layer (20a) of the outer foil (20), whereby the rupture layer (22) ruptures at said at least one break line (24) on inflation of the airbag (26) and forms an opening through the panel (16) for deployment of the inflated airbag (26) into said space (18).

**12.** Method for manufacturing a panel (16) for covering a recess (14) that accommodates an airbag (26), whereby the panel (16) comprises an outer foil (20) comprising at least two foil layers (20a, 20b) wherein one foil layer (20a, 20b) is an outermost foil layer (20a), which method comprises the step of providing the outer foil (20) with a rupture layer (22) that comprises at least one break line (24) that is confined to said rupture layer (22), whereby the rupture layer (22) has a greater stiffness than the outermost foil layer (20a) of the outer foil (20), **characterized in that** the method comprises the step of spraying a foil layer (20a, 20b) on each side of said rupture layer (22).

**13.** Method according to claim 12, **characterized in that** it comprises the step of applying a mask defining said at least one break line (24) onto an outer foil (20) and spraying at least one additional layer onto the outer foil (20) to provide said rupture layer (22).

**14.** Method according to claim 12 or 13, **characterized in that** the outer foil (20) comprises a plastic, a thermoplastic such as polyvinyl chloride (PVC), thermoplastic olefin (TPO), or a thermosetting plastic such as EPDM rubber.

**15.** Method according to any of claims 12-14, **characterized in that** said rupture layer (22) comprises a material having membrane stiffness equal to or greater than 50 N/m.

**16.** Method according to any of claims 12-15, **characterized in that** said rupture layer (22) comprises fibre glass, carbon fibre, Kevlar, a synthetic resin or metal.

**17.** Method according to any of claims 12-16, **characterized in that** said rupture layer (22) is in the form of a net.

**18.** Method according to claim 17, **characterized in that** said outer foil (20) has a thickness up to 3 mm, preferably in the range of 1-2 mm.

**19.** Method according to any of claims 12-18, **characterized in that** said rupture layer (22) has a thickness up to 2 mm, preferably up to 1 mm.

**20.** Method according to any of claims 12-19, **characterized in that** said at least one break line (24) defines a lid (28) having an area, A, and that said rupture layer (22) has an area, B, that is greater than the area, A, of the lid (28).

**21.** Method according to claim 20, **characterized in that** the area, B, of said rupture layer (22) is up to 30% greater than the area, A, of the lid (28).

**22.** Method according to claim 20, **characterized in that** the area, B, of said rupture layer (22) is less than the area, A, of the lid (28), whereby an edge of the rupture layer (22) constitutes a break line (24).

**23.** Vehicle (10), **characterized in that** it comprises a panel (16) according to any of claims 1-10 or an airbag restraint system according to claim 11.

**Patentansprüche**

**1.** Platte zum Bedecken einer Ausnehmung (14), die einen Airbag (26) aufnimmt, wobei die Platte eine äußere Folie (20) umfasst, die über mindestens zwei Folienschichten (20a, 20b) verfügt, wobei die äußere Folie (20) über eine äußerste Folienschicht (20a) verfügt, wobei die Platte eine Reißschicht (22) umfasst, die eine größere Steifigkeit aufweist, als die äußerste Folienschicht (20a) der äußeren Folie (20), wobei die Reißschicht (22) mit einer Oberfläche der äußeren Folie (20) verbunden ist; die Reißschicht (22) ist mit mindestens einer Bruchlinie (24) versehen, die auf die Reißschicht (22) beschränkt ist und ist so ausgelegt, dass sie beim Aufblasen eines Airbags (26) entlang der mindestens einen Bruchlinie (24) reißt und eine Öffnung durch die Platte (16) zur Entfaltung des aufgeblasonen Airbags (26) **dadurch gekennzeichnet, dass** die zwei Folienschichten der äußeren Folie (20) eine aufgesprühte Folienschicht (20a, 20b) umfassen, wobei die aufgesprühten Folienschichten auf jeder der Reißschicht (22) angeordnet sind.

**2.** Platte (16) nach Anspruch 1, **dadurch gekennzeichnet, dass** die Reißsshicht (22) so angeordnet ist, dass sie reißt, wenn die Breite der wenigstens einen Bruchlinie (24) um einen vorbestimmten Wert vergrößert worden ist,

**3.** Platte (16) nach einem der vorhergehenden Ansprüche, **dadurch gekennzeichnet, dass** die äußere Folie (20) einen Kunststoff, einen Thermoplast wie etwa Polyvinylchlorid (PVC), ein thermoplastisches Olefin (TPO) oder einen duroplastischen Kunststoff wie etwa einen EPDM-Gummi umfasst.

**4.** Platte (16) nach einem der vorhergehenden Ansprüche, **dadurch gekennzeichnet, dass** die Reißschicht (22) ein Material umfasst, das eine Membransteifigkeit von gleich oder größer als 50 N/m aufweist.

**5.** Platte (16) nach einem der vorhergehenden Ansprüche, **dadurch gekennzeichnet, dass** die Reißschicht (22) Glasfaser, Kohlefaser, Kevlar, ein Kunstharz oder Metall umfasst.

6. Platte (16) nach einem der vorhergehenden Ansprüche, **dadurch gekennzeichnet, dass** die Reißschicht (22) in Form eines Netzes vorliegt.

7. Platte (16) nach einem der vorhergehenden Ansprüche, **dadurch gekennzeichnet, dass** die Platte eine Dikke von bis zu 15 mm aufweist, vorzugsweise im Bereich von 1 bis 3 mm.

8. Platte (16) nach einem der vorhergehenden Ansprüche, **dadurch gekennzeichnet, dass** die Reißschicht eine Dicke von bis zu 3 mm aufweist, vorzugsweise von bis zu 1 mm.

9. Platte (16) nach einem der vorhergehenden Ansprüche, **dadurch gekennzeichnet, dass** die wenigstens eine Bruchlinie (24) einen Deckel (28) definiert, der eine Fläche A aufweist, und dass die Reißschicht (22) eine Fläche B aufweist, die größer ist als die Fläche A des Deckels (28).

10. Platte (16) nach einem der vorhergehenden Ansprüche, **dadurch gekennzeichnet, dass** die Fläche B der Reißschicht (22) um bis zu 30% größer ist als die Fläche A des Deckels (28).

11. Airbag-Rückhaltesystem umfassend einen Airbag (26) und eine Platte (16) nach einem der Ansprüche 1 bis 10, für einer Ausnehmung (14), die einen Airbag (26) aufnimmt, **dadurch gekennzeichnet, dass** die Reißschicht (22), die wenigstens eine Bruchlinie (24) aufweist, zwischen dem Airbag (26) und der äußersten Folienschicht (20a) der äußeren Folie (20) angeordnet ist, wodurch die Reißschicht (22) beim Aufblasen des Airbags (26) an der wenigstens einen Bruchlinie (24) reißt und eine Öffnung zum Entfalten des aufgeblasenen Airbags (26) durch die Platte (16) in den Raum (18) bildet.

12. Verfahren zum Herstellen einer Platte (16) zum Bedecken einer Ausnehmung (14), die einen Airbag (26) aufnimmt, wobei die Platte (16) eine äußere Folie (20) aufweist, die wenigstens zwei Folienschichten (20a, 20b) umfasst, wobei eine Folienschicht (20a, 20b) eine äußerste Folienschicht (20) ist, wobei das Verfahren den Schritt des Vorsehens der äußeren Folie (20) mit einer Reißschicht (22) umfasst, die wenigstens eine Bruchlinie (24) umfasst, welche auf die Reißschicht (22) begrenzt ist, wobei die Reißschicht (22) eine größere Steifigkeit aufweist als die äußerste Folienschicht (20a) der äußeren Folie (20), **dadurch gekennzeichnet, dass** das Verfahren den Schritt umfasst, eine Folienschicht (20a, 20b) auf jede Seite der Reißschicht (22) aufzusprühen.

13. Verfahren nach Anspruch 12, **dadurch gekennzeichnet, dass** es den Schritt umfasst, eine Maske, welche die wenigstens eine Bruchlinie (24) definiert, auf eine äußere Folie (20) auszubringen und wenigstens eine zusätzliche Schicht auf die äußere Folie (20) aufzusprühen, um die Reißschicht (22) zum schaffen.

14. Verfahren nach Anspruch 12 oder 13, **dadurch gekennzeichnet, dass** die äußere Folie (20) einen Kunststoff, einen Thermoplast wie etwa Polyvinylchlorid (PVC), ein thermoplastisches Polyolefin (TPO) oder einen duroplastischen Kunststoff wie etwa einen EPDM-Gummi umfasst.

15. Verfahren nach einem der Ansprüche 12 bis 14, **dadurch gekennzeichnet**, die Reißschicht (22) ein Material umfasst, das Membransteifigkeit von gleich oder größer als 50 N/m aufweist

16. Verfahren nach einem der Ansprüche 12 bis 15, **dadurch gekennzeichnet, dass** die Reißschicht (22) Glasfaser, Kohlefaser, Kevlar, ein Kunstharz oder Metall umfasst.

17. Verfahren nach einem der Ansprüche 12 bis 16, **dadurch gekennzeichnet, dass** die Reißschicht (22) in Form eines Netzes vorliegt.

18. Verfahren nach Anspruch 17, **dadurch gekennzeichnet, dass** die außere Folie (20) eine Dicke von bis zu 3 mm aufweist, vorzugsweise im Bereich von 1 bis 2 mm.

19. Verfahren nach einem der Ansprüche 12 bis 18, **dadurch gekennzeichnet, dass** die Reißschickt (22) eine Dicke Von bis zu 2 mm aufweist, vorzugsweise von bis zu 1 mm.

20. Verfahren nach einem der Ansprüche 12 bis 19, **dadurch gekennzeichnet, dass** die wenigstens eine Bruchlinie (24) einen Deckel (28) definiert, der eine Fläche A aufweist, und dass die Reißschicht (22) eine Fläche B aufweist, die größer ist als die Fläche A des Dekkels (28).

21. Verfahren nach Anspruch 20, **dadurch gekennzeichnet, dass** die Fläche B der Reißschicht (22) um bis zu 30% größer ist als die Fläche A des Dekkels (28).

22. Verfahren nach Anspruch 20, **dadurch gekennzeichnet, dass** die Fläche B der Reißschicht (22) kleiner ist als die Fläche A des Deckels (28), wodurch eine Kante der Reißschicht (22) eine Bruchlinie (24) bildet.

23. Fahrzeug (10), **dadurch gekennzeichnet, dass** es eine Platte (16) nach einem der Ansprüche bis 10 ein Airbagrückhaltesystem Anspruch 11 umfasst.

## Revendications

1. Panneau de couverture d'un logement (14) qui reçoit un coussin gonflable de sécurité (26), panneau qui comprend une feuille extérieure (20) avec au moins deux couches pelliculaires (20a, 20b), la feuille extérieure (20) comprenant une couche pelliculaire extérieure (20a), le panneau comprenant une couche de rupture (22) ayant une rigidité supérieure à celle de la couche pelliculaire la plus extérieure (20a) de la feuille extérieure (20), ladite couche de rupture (22) étant réunie à une surface de ladite feuille extérieure (20), la couche de rupture (22) étant pourvue d'au moins une ligne de déchirure (24) qui est confinée dans ladite couche de rupture (22) et qui est prévue pour se déchirer le long de ladite au moins une ligne de déchirure (24) lors du gonflage d'un coussin gonflable de sécurité (26) et pour former une ouverture dans le panneau (16) pour le déploiement du coussin gonflable de sécurité gonflé (26), **caractérisé en ce que** lesdites deux pelliculaires de ladite feuille extérieure (20) comprennent une couche pelliculaire pulvérisée (20a, 20b), lesdites couchés pelliculaires pulvérisée étant disposées sur chaque face de ladite couche de rupture (22).

2. Panneau (16) selon la revendication 1, **caractérisé en ce que** ladite couche de rupture (22) est prévue pour se déchirer lorsque la largueur de ladite au moins une ligne de déchirure (24) s'est agrandie d'un montant prédéterminé.

3. Panneau (16) selon l'une quelconque des revendications précédentes, **caractérisé en ce que** la feuille extérieure (20) comprend un plastique, un thermoplastique tel le polychlorure de vinyle (PVC), une oléfine thermoplastique (TPO), ou un plastique thermodurcissable tel du caoutchouc EPDM (éthylène-propylène-diène monomère).

4. Panneau. (16) selon l'une quelconque des revendications précédentes, **caractérisé en ce que** ladite couche de rupture (22) comprend un matériau ayant une rigidité membranaire égale ou supérieure à 50 N/m.

5. Panneau (16) selon l'une quelconque des revendications précédentes, **caractérisé en ce que** ladite couche de rupture (22) comprend des libres de verre, des fibres de carbone, du Kevlar, une résine synthétique ou du métal.

6. Panneau (16) selon l'une quelconque des revendications précédentes, **caractérisé en ce que** ladite couche de rupture (22) se présente sous la forme d'un filet.

7. Panneau (16) l'une quelconque des revendications précédentes, **caractérisé en ce que** le panneau possède une épaisseur allant jusqu'à 15 mm, et de minière préférée comprise dans la plage 1-3 mm.

8. Panneau (16) selon l'une quelconque des revendications précédentes, **caractérisé en ce que** ladite couche de rupture une épaisseur allant jusqu'à 3 mm, et de manière préférée jusqu'à 1 mm.

9. Panneau (16) l'une quelconque des revendication **caractérisé en ce que** ladite au moins une ligne de déchirure (24) définit un couvercle (28) ayant une aire de surface A, et **en ce que** ladite couche de rupture (22) a une aire de surface B qui est supérieure à l'aire de surface A du couvercle (28).

10. Panneau (16) selon la revendication 9, **caractérisé en ce que** l'aire de surface B de ladite couche de rupture (22) est jusqu'à 30 % supérieure à l'aire de surface A du couvercle (28).

11. Système de retenue d'un coussin gonflable de sécurité comprenant un coussin gonflable de sécurité (26) et un panneau (16) selon l'une quelconque des revendications 1 à 10 et destiné à un logement (14) qui reçoit un coussin gonflable de sécurité (26), **caractérisé en ce que** ladite couche de rupture (22) qui comprend au moins une ligne de déchirure (24) est placée entre le coussin gonflable de sécurité (26) et la couche la plus extérieure (20a) de la feuille extérieure (20), la couche de rupture (22) se rompant au niveau de ladite au moins une ligne de déchirure (24) lors du gonflage du coussin gonflable de sécurité (26) et formant une ouverture dans le panneau (16) pour le déploiement du coussin gonflable de sécurité gonflé (26) dans l'espace passager (18).

12. Procédé de fabrication d'un panneau (16) de couverture d'un logement (14) qui reçoit un coussin gonflable de sécurité (26), dans lequel le panneau (16) comprend une feuille extérieure (20) comprenant au moins deux couches pelliculaires (20a, 20b), une couche pelliculaire (20a, 20b) étant une couche pelliculaire la plus extérieure (20a), ledit procédé comprenant l'étape consistant à doter la feuille extérieure (20) d'une couche de rupture (22) qui comprend au moins une ligne de déchirure (24) qui est confinée dans ladite couche de rupture (22), la couche de rupture (22) ayant une rigidité supérieure à celle de la couche pelliculaire la plus extérieure (20a) de la feuille extérieure (20), **caractérisé en ce que** le procécé comprend l'étape consistant à pulvériser une couche pelliculaire (20a, 20b) sur chaque de ladite couche de rupture (22).

13. Procédé selon la revendication 12, **caractérisé en ce qu'**il comprend l'étape d'application d'un masque définissant ladite au moins une ligne de déchirure (24) sur une feuille extérieure (20) et la pulvérisation d'au moins une couche supplémentaire sur la feuille extérieure (20) pour produire ladite couche de rupture (22).

**14.** Procédé selon, la revendication 12 ou 13, **caractérisé en ce que** la feuille extérieure (20) comprend un plastique, une thermoplastique tel le polychlorure de vinyle (PVC), une oléfine thermoplastique (TPO), ou un plastique thermodurcissable tel du caoutchouc EPDM (éthyléne-propylène-diène monomère).

**15.** Procédé selon l'une quelconque des revendications 12 à 14, **caractérisé en ce que** ladite couche de rupture (22) comprend un matériau ayant une rigidité membranaire égale ou supérieure à 50 N/m.

**16.** Procédé selon l'une quelconque des revendications 12 à 15, **caractérisé en ce que** ladite couche de rupture (22) comprend des fibres de verre, des fibres de carbone, du Kevlar, une résine synthétique ou du métal.

**17.** Procédé selon l'une quelconque des revendications 12 à 16, *caractérisé en ce que* ladite couche de rupture (22) se présente sous la forme d'un filet.

**18.** Procédé selon la revendication 17, *caractérisé en ce que* ladite feuille extérieure (20) possède une épaisseur allant jusqu'à 3 mm, et de manière préférée comprise dans la plage 1-2 mm.

**19.** Procédé selon l'une quelconque des revendications 12 à 18, *caractérisé en ce que* ladite couche de rupture (22) possède une épaisseur allant jusqu'à 2 mm, et de manière préférée jusqu'à 1 mm.

**20.** Procédé selon l'une quelconque des revendications 12 à 19, *caractérisé en ce que* ladite au moins une ligne de déchirure (24) définit un couvercle (28) ayant une aire de surface A, et *en ce que* ladite couche de rupture (22) a une aire de surface B qui est supérieure à l'aire de surface A du couvercle (28).

**21.** Procédé selon la revendication 20, *caractérisé en ce que* l'aire de surface B de ladite couche de rupture (22) est jusqu'à 30 % supérieure à l'aire de surface A du couvercle (28).

**22.** Procédé selon la revendication 20, *caractérisé en ce que* l'aire de surface B de ladite couche de rupture (22) est inférieure à l'aire de surface A du couvercle (28), un bord de la couche de rupture (22) constituant une ligne de déchirure (24).

**23.** Véhicule (10), *caractérisé en ce qu'*il comprend un panneau (16) selon l'une quelconque des revendications 1 à 10, ou un système de retenue d'un coussin gonflable de sécurité selon la revendication 11.

10

12
14

Fig. 1

12

24

20

22

16

14

Fig. 2

Fig. 3

Fig. 4

Fig. 5

**EP 2 008 878 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10135614
- US 6065771 A
- EP 1193140 A
- WO 2004058444 A
- WO 9901317 A
- US 2003222063 A
- US 2001037998 A